Europäisches Patentamt

European Patent Office

Office européen des brevets

(11) Publication number: 0 382 186
A2

# EUROPEAN PATENT APPLICATION

(21) Application number: 90102406.7

(51) Int. Cl.5: B60J 7/12

(22) Date of filing: 07.02.90

(30) Priority: 10.02.89 JP 32189/89

(43) Date of publication of application:
16.08.90 Bulletin 90/33

(84) Designated Contracting States:
DE FR GB

(71) Applicant: Mazda Motor Corporation
No. 3-1, Shinchi Fuchu-cho
Aki-gun Hiroshima-ken(JP)

(72) Inventor: Omoto, Seiichi
29-10 Ochiai-minami 4-chome, Asa-kita-ku
Hiroshima-shi, Hiroshima-ken(JP)
Inventor: Matsumoto, Kenji
7-11-204 Hamada 3-chome, Fuchu-cho
Aki-gun, Hiroshima-ken(JP)
Inventor: Kubota, Satoshi
9-14-C101 Inokuchidai 3-chome, Nishi-ku
Hiroshima-shi, Hiroshima-ken(JP)

(74) Representative: Lange, Gerd, Dipl.-Ing.
Nachtigallenweg 8 Postfach 2425
D-4950 Minden(DE)

(54) A slidable roof control device for a motor vehicle.

(57) A slidable roof control device for a motor vehicle wherein a roof panel opening of a motor vehicle, being covered with a slidable roof, can be opened both from the forward and the rearward direction of the vehicle body. The control device includes a first ON/OFF command mechanism on the driver seat for commanding a drive mechanism to open or close the flexible member, a second ON/OFF command mechanism on the rear seat for commanding the drive mechanism to open or close the flexible member, and a control mechanism, responsive to the output from the first and the second ON/OFF command mechanism, for controlling the activation of the drive mechanism as well as restricting the closing motion of the slidable roof in the rear seat at least by the first ON/OFF command mechanism.

## A Slidable Roof Control Device for a Motor Vehicle

DETAILED DESCRIPTION OF THE INVENTION

1. Field of the Invention

The present invention relates to a slidable roof control device for a motor vehicle.

2. Description of the Prior Art

A slidable roof apparatus equipped with a flexible member as a slidable roof to cover a roof panel opening of a motor vehicle wherein the flexible member is openable from the forward to the rearward direction of a vehicle body has been known in the art as disclosed in Japanese Utility Model Application Laying Open Gazette No. 63-40228.

However, this type of the slidable roof apparatus opens only the front of the roof panel opening of the vehicle body by opening the flexible member. Therefore, when there are passengers in the rear seat, the flexible member is folded in the rear of the roof panel opening as well as in the overhead portion of the passengers in the rear seat. This means that even if the roof panel opening is opened to the full, the passengers in the rear seat may feel uncomfortable a stifling.

Therefore, the applicant invented a device wherein a roof panel can be slidable in the forward and the rearward direction of the vehicle body so as to open the roof panel both from the front and the rear side thereof.

However, a problem arises in such a device wherein the rear portion of the slidable roof can be openable, because there is a possibility that passengers may be caught between the roof if the slidable roof is closed when they are standing on the rear seat.

SUMMARY OF THE INVENTION

The primary object of the present invention is to provide a slidable roof control device for a motor vehicle which can offer passengers in the rear seat a comfortable ride by eliminating the possibility that passengers may be caught between the roof.

To achieve the above-mentioned objects, a slidable roof control device for a motor vehicle in the present invention is provided with a roof panel constituting an upper portion of a vehicle body, a roof panel opening provided on the roof panel of the vehicle body and enclosed with a front header, a right and a left roof rails and a rear header, a flexible member mounted on the roof panel to be foldable in the longitudinal direction of the vehicle body, said flexible member selectively taking a folded state for opening the roof panel opening and an extended state for closing the roof panel opening. This device comprises: drive means operatively interconnected with a front and a rear portions of the flexible member for moving the front and the rear portion thereof to the rearward or the forward direction of the vehicle body so as to open the front and the rear of the roof panel opening, while moving the front and the rear portion of the flexible member to the forward or the rearward direction so as to close the front and the rear of the roof panel opening; first ON/OFF command means provided on the driver seat for commanding the drive means to open or close the flexible member; second ON/OFF command means provided on the rear seat for commanding the drive means to open or close the flexible member; and control means, responsive to the output from the first and the second ON/OFF command means, for controlling the activation of the drive means as well as restricting the closing motion of the slidable roof in the rear seat at least by the first ON/OFF command means.

In this invention, the drive means is desirably equipped with a first drive motor and a second drive motor. The first drive motor is operatively interconnected with the front portion of the flexible member so as to move the front portion thereof. The second drive motor is operatively interconnected with the rear portion of the flexible member so as to move the rear portion thereof.

The aforementioned control means restricts the closing motion of the slidable roof in the rear seat by the first ON/OFF command means. For example, the control means prohibits the closing motion of the slidable roof panel in the rear seat by the first ON/OFF command means.

Further object of the present invention is to provide a slidable roof control device for a motor vehicle equipped with the first ON/OFF command means of a two-step control switch. This means that the flexible member can be closed only when the first ON/OFF command means carries out a second step control where the closing motion of the flexible member starts following a first step control where the closing motion of the flexible member has not yet started. Accordingly, in the present invention, the switch of the first ON/OFF command means does not close with the first step control, just arousing an operator's attention to the safety, and then closes with the second step control. In this way, the safety of passengers on the rear seat is guaranteed.

The present invention provides a slidable roof control device for a motor vehicle wherein the second ON/OFF command means commands the opening and the closing of only the rear portion of the flexible member.

The device of the present invention is controlled so that the control means regulates the drive means to close the slidable roof in the rear seat when the first ON/OFF command means continues to issue a command of closing the slidable roof in the rear seat during a certain period of time.

Furthermore, the present invention is to provide a slidable roof control device for a motor vehicle which is provided with a roof panel constituting an upper portion of a vehicle body, a roof panel opening provided on the roof panel of the vehicle body and enclosed with a front header, a right and a left roof rails and a rear header, a flexible member mounted on the roof panel to be foldable in the longitudinal direction of the vehicle body, said flexible member selectively taking a folded state for opening the roof panel opening and a extended state for closing the roof panel opening. This device comprises: drive means operatively interconnected with a rear portion of the flexible member for moving the rear portion thereof to the forward direction of the vehicle body so as to open the rear of the roof panel opening while moving the rear portion of the flexible member to the rearward direction so as to close the rear of the roof panel opening; first ON/OFF command means provided on the driver seat for commanding the drive means to open or close the rear portion of the flexible member; second ON/OFF command means provided on the rear seat for commanding the drive means to open or close the rear portion of the flexible member; and control means, responsive to the output from the first and the second ON/OFF command means, for controlling the activation of the drive means as well as restricting the closing motion of the slidable roof in the rear seat at least by the first ON/OFF command means.

The foregoing and other objects, and novel features of the invention will become more apparent upon reading the following detailed description and drawings.

BRIEF DESCRIPTION OF THE DRAWINGS

The accompanying drawings show a preferred embodiment of the present invention, in which:

Fig.1 is a perspective view of a motor vehicle which has adopted the present invention;

Fig.2(a) is a sectional view taken along the line A-A of Fig.1;

Fig.2(b) is a sectional view taken along the line B-B of Fig.2(a);

Fig.3(a) is a similar view to Fig.2(a) but showing the rear of a roof panel opening of a vehicle body;

Fig.3(b) is a sectional view taken along the line C-C of Fig.3(a);

Fig.4 is a schematic plan view of a frame member;

Fig.5 is a partly plan view showing a portion wherein a drive motor is mounted;

Fig.6 is a sectional view taken along the line VI-VI of Fig.5;

Fig.7 is a perspective view showing the relation among the drive motor, a drive wire and a gear;

Fig.8 is a schematic plan view showing an another embodiment;

Fig.9 is a sectional view taken along the line IX-IX of Fig.8;

Fig.10 is a block diagram showing a construction of a control system;

Figs.11 through 14 are time charts showing control operations;

Fig.15 is a plan view of the frame member which is provided with the drive motor;

Fig.16 is a sectional view showing a portion wherein the drive motor is mounted.

DETAILED DESCRIPTION OF THE PREFERRED EMBODIMENT

A preferred embodiment of the present invention will be described in detail in connection with the accompanying drawings.

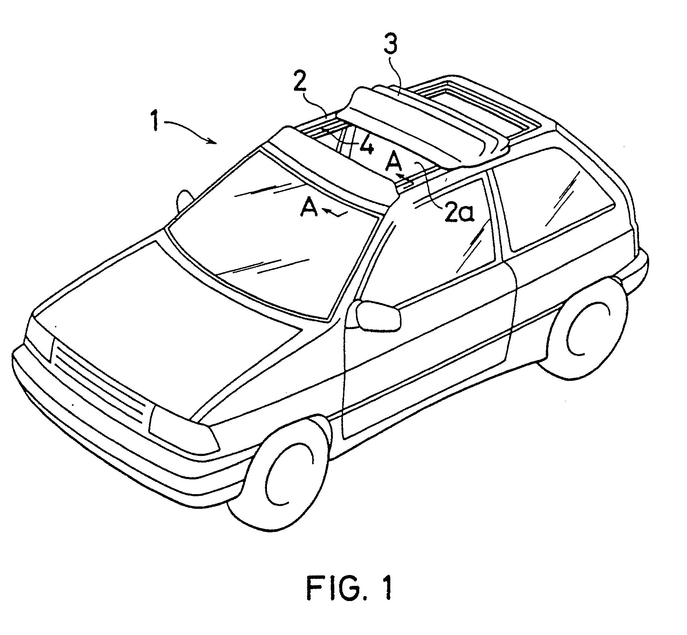

Referring to Fig.1, reference numeral 1 designates a motor vehicle. A roof panel 2 of the motor vehicle 1 has an opening 2a. This roof panel opening 2a is openably and closably covered with a flexible member 3 (a hood member). More specifically, the flexible member 3 is foldably provided in the longitudinal direction on the vehicle roof panel 2 so as to selects a folded state of opening the roof panel opening 2a or an extended state of closing the opening 2a.

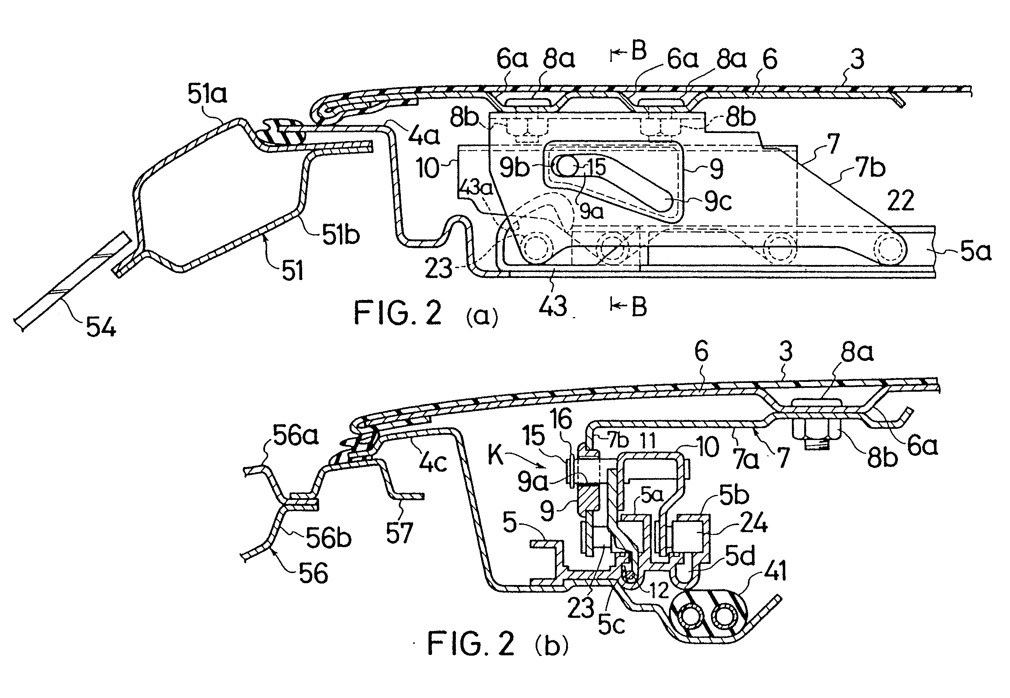

Mounted on the vehicle roof panel 2 is a rectangular-shaped frame member 4. Guide rails 5, 5 (refer to Figs.2(a) and (b) ) are provided at the both sides of the frame member 4. Foldably mounted along the guide rails 5, 5 is the flexible member 3 so as to be openable (foldable) in the longitudinal direction of the vehicle body both from the forward or the rearward direction thereof.

More closely looking at the front portion of the flexible member 3, as shown in Figs.2(a) and (b), formed at the right and the left side of a front plate member 6 are mounting portions 6a, 6a on which a mounting bracket 7 is fixed by means of bolts 8a and nuts 8b. The mounting bracket 7 includes a base 7a fixed on the mounting portions 6a, 6a, and a supporting portion 7b downwardly extending at the outer periphery of the base 7a. A cam member 9 having a cam groove 9a is secured in the supporting portion 7b. The cam groove 9a includes a front horizontal groove portion 9b extending substantially in the horizontal direction, and a rear inclined groove portion 9c downwardly extending to the rearward direction from the rear end of the horizontal groove portion 9b.

A slider 10 having a substantially inverted U-shape in cross section is connected with the mounting bracket 7 by means of an engaging pin 15. This engaging pin 15 slidably engages with the cam groove 9a of the cam member 9. The engaging pin member 15 projects sideward from the upper portion of the slider 10. The end portion of the engaging pin member 15 passing through the cam groove 9a of the cam member 9 is provided with a snap ring 16 whereby the mounting bracket 7 and the slider 10 are connected. The engagement between the engaging pin member 15 and the cam groove 9a of the cam member 9 constitutes a tilt means K for tilting up the front portion of the flexible member 3 at the initial phase of the opening operation.

The rear part of the supporting portion 7b of the mounting bracket 7 has, at the lower end thereof, a shoe member 22 which slidably engages with an outside guide groove 5a of the guide rail 5, while the front part of the supporting portion 7b has, at the lower end thereof, an another shoe member 23 which slides on the upper surface of the guide rail 5. Thus, with this arrangement, the front end portion of the flexible member 3 moves upward when the flexible member 3 retreats.

The slider 10 slidably engages with an inside guide groove 5b of the guide rail 5 by means of shoe members 24, 24. A guide bracket 11 corresponding to the guide rail 5 is fixed to the slider 10. The guide bracket 11 is also connected with a front drive wire 12 which is located in a housing groove 5c outside the guide rail 5.

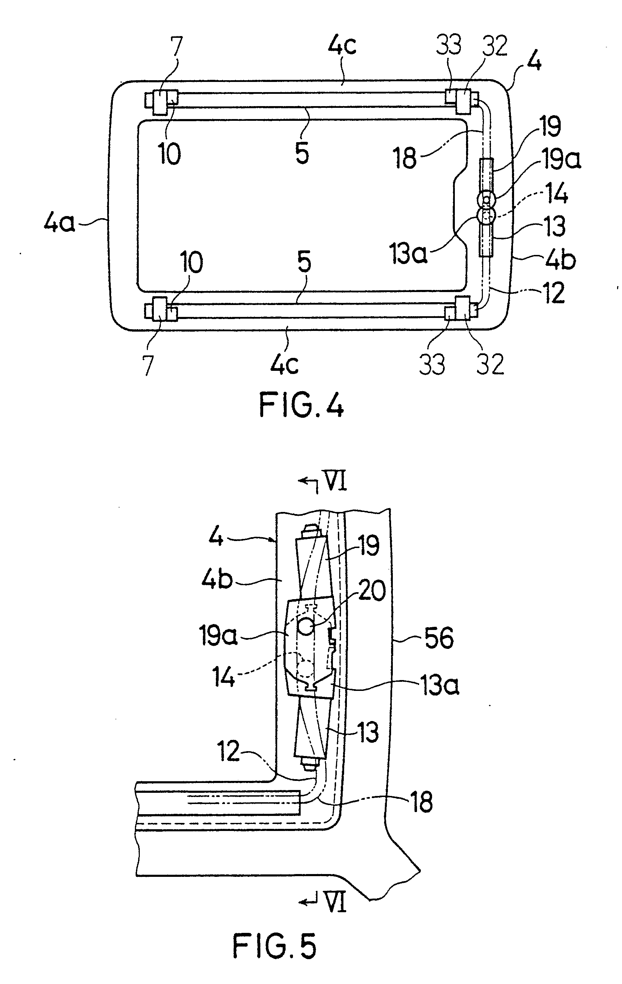

As shown in Figs.4 through 7, the drive wire 12 engages with a gear 14 which is rotated by a first drive motor 13 locating substantially at the center of the rear side of the frame member 4. Then the drive wire 12 extends inside a front idle cable housing portion 41a, an outer idle cable housing of a cable housing member 41 located below the other guide rail 5. With the rotation of the first drive motor 13, the drive wire 12 opens the front portion of the flexible member 3. As a result, the front of the roof panel opening 2a is opened.

Accordingly, when opening the front portion of the flexible member 3, first the slider 10 withdraws and this withdrawal changes the relation of the engagement between the engaging pin member 15 and the cam groove 9a of the cam member 9 so as to restrict the position of the mounting bracket 7. Then the front portion of the mounting bracket 7 moves upward against the slider 10. As a result, the front plate member 6, i.e. the front portion of the flexible member 3 tilts up and then withdraws to open.

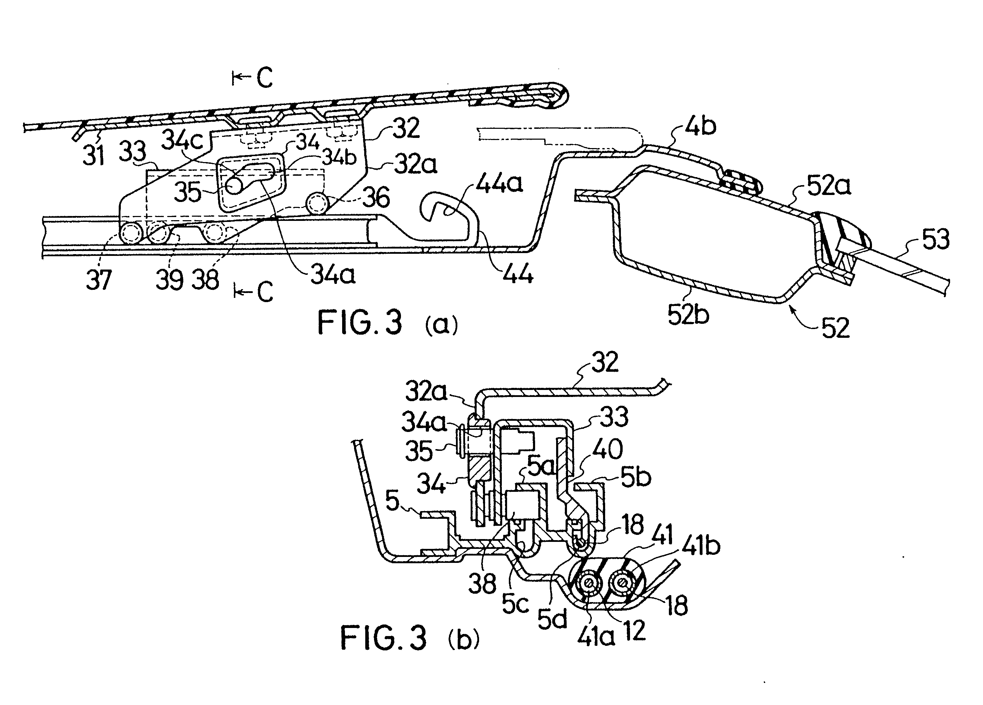

The rear portion of the flexible member 3 opens in the same manner as the front portion thereof. That means the rear plate member 31, i.e. the rear portion of the flexible member 3 tilts up and then move forward to open the rear of the roof panel opening 2a. More specifically, as shown in Fig.3(a), (b), a mounting bracket 32 is fixed on the rear plate member 31. A slider 33 is connected with a supporting portion 32a of the mounting bracket 32 by means of a engaging pin member 35 which slidably engages with a cam groove 34a of a cam member 34 fixed on the mounting bracket 32. In contrast with the cam groove 9a of the front cam member 9, the cam groove 34a comprises a rear horizontal groove portion 34b extending substantially in the horizontal direction, and an inclined groove portion 34c downwardly extending to the forward direction from the front end of the horizontal groove portion 34b. The mounting bracket 32 and the slider 33 are provided with guide shoes 36, 37 and 38, 39.

A rear drive wire 18 is connected, by means of a guide bracket 40, with the slider 33 which tilts up or opens the rear plate member 31. The rear drive wire 18 is disposed in a housing groove 5d inside the guide rail 5. The rear drive wire 18 engages with a gear 20 which is rotated by a second drive motor 19 located substantially at the center in the rear portion of the frame member 4. Then the rear drive wire 18 extends inside a rear idle cable housing portion 41b, an inner idle cable housing of the housing member 41 located below the other guide rail 5. With this arrangement, the rear drive wire 18 is operated by the rotation of the second drive motor 19.

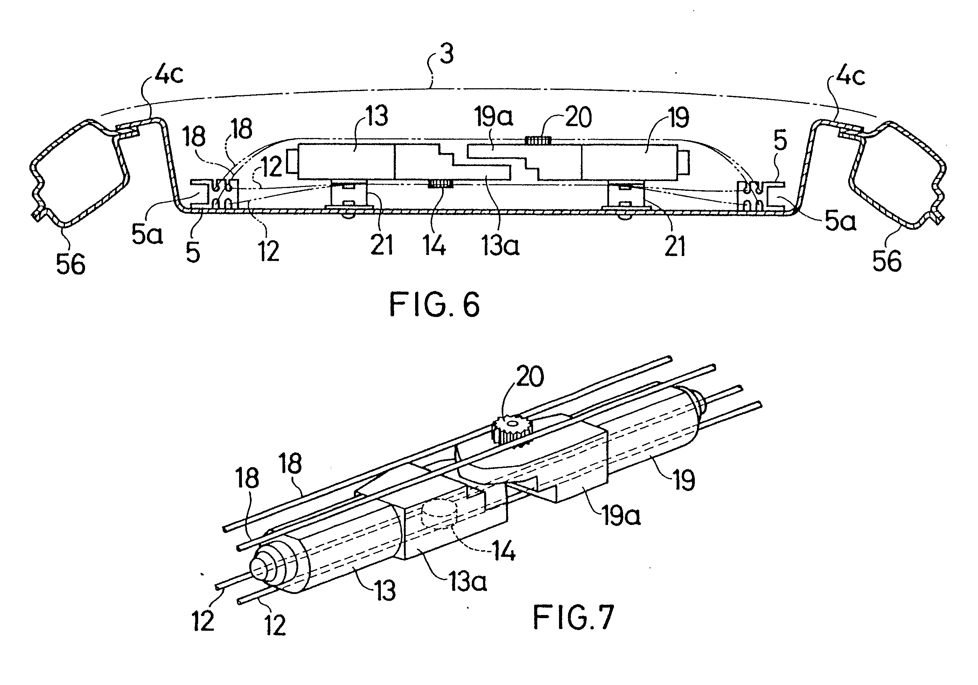

Both first and second drive motors 13, 19 are located substantially at the center of the rear portion of the frame member 4. In this way, the first and the second drive motors 13, 19 are disposed in one place so as not to reduce the opening area of the roof panel opening 2a. Furthermore, a portion of reduction gear parts 13a, 19a which are small in the vertical direction are superposed in the upper and the lower directions in one place. In this way, relatively small space (especially the space in the widthwise direction) is required for disposing the first and the second motors 13, 19. The gears 14, 20 are located respectively under the reduction gear part 13a and above the reduction gear part 19a. The drive motors 13, 19 are mounted on the frame member 4 by means of brackets 21, 21.- (refer to Fig.6)

Stopper members 43, 44 are mounted respectively at the front and the rear ends of the guide rails 5, 5. The interval in the longitudinal direction between the stopper members 43, 44 is set longer than the length of the flexible member 3 when the flexible member 3 is in the fully-closed state by its tensile force. Accordingly, either the front portion first closes or the rear portion first closes, the flexible member 3 always stretches to the full to close. The stopper member 43 and 44 are provided with upwardly-indented stopper grooves 43a, 44a with which the guide shoes 23, 36 engage. For example, if the front portion of the flexible member 3 (the guide shoe 23) first makes contact with the stopper member 43, the front portion tends to be pulled rearwardly when closing the rear portion. However, this force to rearward direction is a tensile force of the flexible member 3 and it acts on the upper direction of the engaging pin member 15. Therefore, the front portion of the flexible member 3 (the front plate member 6) pivotally moves upward with the engaging pin member 15 as a rotational axis. Thus, the guide shoe 23 engages with the stopper groove 43a of the stopper member 43. As a result, the rearward force can be restricted. On the other hand, when opening the front portion of the flexible member 3, force is generated by the drive wire 12. This force acts on the lower direction of the engaging member 15. Therefore, even when the guide shoe 23 engages with the stopper groove 43a of the stopper member 43, the engagement is released. Thus, the front portion of the flexible member 3 withdraws smoothly, opening the roof panel opening 2a.

Although not shown in the drawings, a folding mechanism as disclosed in Japanese Utility Model Application Laying Open Gazette No. 63-40228 is mounted between the front plate member 6 and the rear plate member 31 in the flexible member 3. This folding mechanism makes the flexible member 3 foldable.

A front portion 4a of the frame member 4 is provided on a front header 51 with a closed cross section. The front header 51 comprises an upper panel 51a and a lower panel 51b. The front portion 4a of the frame member 4 extends rearwardly from the front header 51. The part where the front portion 4a extends from the front header 51 is covered with the front portion of the flexible member 3 (the front plate member 6). Likewise, the rear portion 4b of the frame member 4 is provided on a rear header 52 with a closed cross section. The rear header 52 comprises an upper panel 52a and a lower panel 52b. Reference numerals 53, 54 designate respectively a rear window glass and a front window glass.

Side portions 4c, 4c of the frame member 4 are mounted on a roof rail outer 56a of a roof rail 56 with a closed cross section. The roof rail 56 comprises this roof rail outer 56a and a roof rail inner 56b. The roof rails 56, as well as the front header 51 and the rear header 52 enclose the roof panel opening 2a.

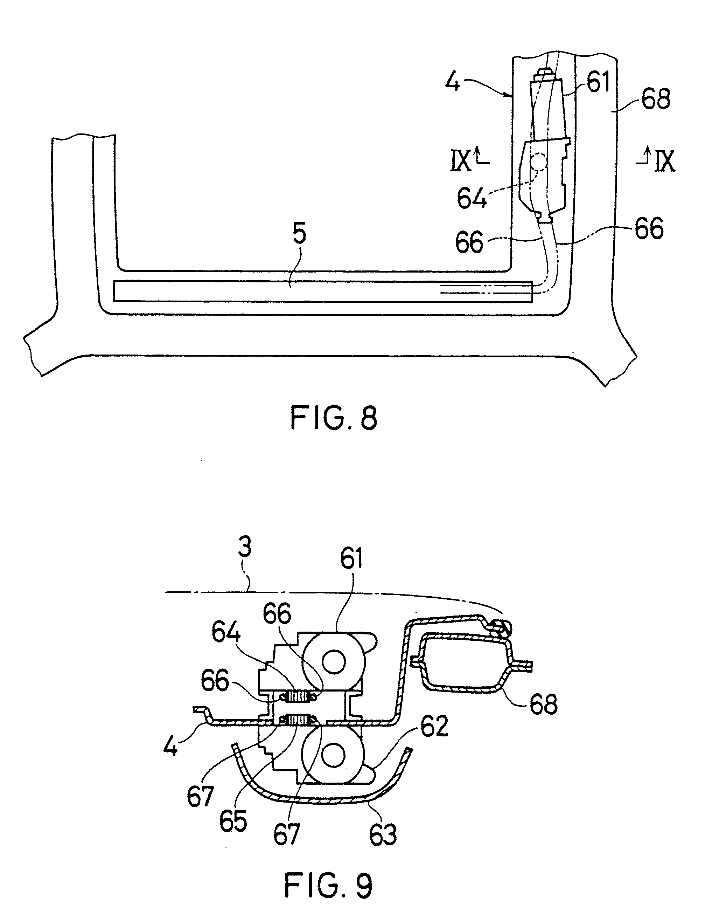

In the aforementioned embodiment of the present invention, a portion of the reduction gear parts 13a, 19a of the first and the second drive motors 13, 19 are superposed in the upper and the lower positions in one place. However, the position of superposing the reduction gear parts 13a, 19a is not limited to the upper and the lower directions. Furthermore, not only small portions but also the whole portions of the reduction gear parts 13a, 19a can be superposed. As shown in Figs. 8 and 9, the drive motors 61, 62 can be disposed in the upper and the lower positions of the frame member 4 so as to superpose the whole portion of the drive motors 61, 62. In this case, the lower drive motor 62 is covered with a trim 63. Reference numerals 64, 65 designate gears with which the drive wires 66, 66, 67, 67 engage. Reference numeral 68 designates a rear header.

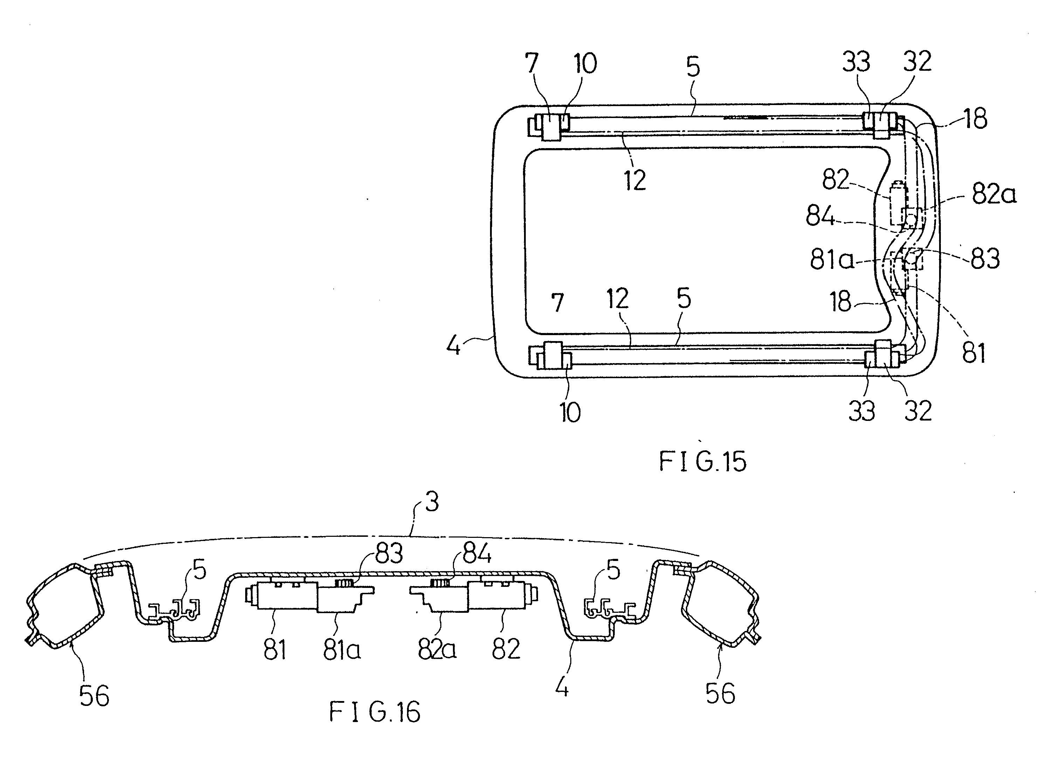

In addition, as shown in Figs. 15 and 16, the drive motors 81, 82 having the reduction gear parts 81a, 82a can be mounted apart from each other instead of being superposed. That means the drive motors 81, 82 are disposed in the lower position of the frame member 4 so that the drive motors 81, 82 are spaced apart in the widthwise direction of the vehicle body. In this case, the drive motors 81, 82 are covered with trims (not shown in the drawings). Reference numerals 83, 84 designate gears with which drive wires 12, 12, 18, 18 engage.

The following is a description about a control system which controls the above-mentioned drive motors 13, 19 (61, 62).

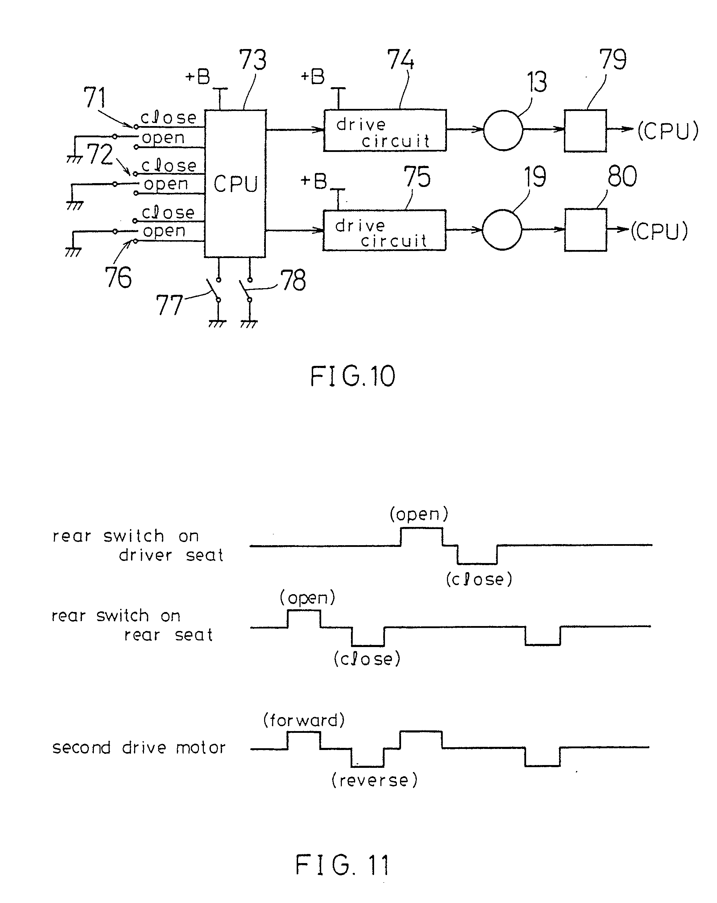

In Fig. 10, reference numerals 71, 72 designate respectively a front switch on the driver seat and a rear switch on the driver seat (the first ON/OFF command means), each provided close to the driver seat for opening or closing the front and the rear portions of the flexible member 3. CPU 73 receives ON/OFF signals from the switches 71, 72 and controls the first and the second drive motors 13, 19 by means of the drive circuits 74, 75.

Reference numeral 76 designates a rear switch on the rear seat (the second ON/OFF command means) provided close to the rear seat for opening or closing the rear portion of the flexible member 3. Receiving ON/OFF signals from the switch 76, CPU73 controls the activation of the second drive motor 19 by means of the drive circuit 75.

Reference numerals 77, 78 designate respectively a front limit switch and a rear limit switch. These front and the rear limit switches 77, 78 sense the tilt-up state of the front and the rear portion of the flexible member 3 and then input the detection signals to CPU 73.

Reference numerals 79, 80 designate lock detecting means for the drive motors 13, 19. The lock detecting means detects the state where the drive motors 13, 19 stop activation thereof when the flexible member 3 opens or closes to the full or is folded at the central position. (refer to Fig.1) Then the lock detecting means sends the detection signals to CPU 73. Finally, CPU 73, receiving the signals from the lock detecting means, prohibits the drive circuit 74, 75 from sending the operation signal to the drive motors 13, 19.

Control for opening and closing the front portion of the flexible member 3 by the above-mentioned control system can be carried out by ON/OFF operation of the front switch 71 on the driver seat. When turning the front switch 71 into the open position, the first drive motor 13 is activated to tilt up the front portion of the flexible member 3. In detail, the activation of the first drive motor 13 operates the drive wires 12, 12. As a result, the slider 10 slightly withdraws backward, causing the transition of the engaging pin member 15 from the horizontal groove portion 9b to the inclined groove portion 9c of the cam groove 9a of the cam member 9. Since the position of the engaging pin member 15 is restricted in the vertical direction, the front part of the mounting bracket 7 moves upward. In other words, the rear shoe member 22 of the mounting bracket 7 is positioned in the guide groove 5a of the guide rail 5 while the front shoe member 23 is positioned on the upper surface of the guide rail 5. Accordingly, since the mounting bracket 7 is attached on the front plate member 6 by means of the mounting portions 6a, 6b, the front plate member 6 tilts up, thereby creating the clearance between the rear portion of the flexible member 3 and the vehicle roof panel 2.

With the end of the tilting-up motion, the front limit switch 77 enters into the ON state. When further setting the front ON/OFF switch 71 in the open position, the drive motor 13 is further activated and the front plate member 6 together with the slider 10 withdraws while folding the front portion of the flexible member 3, thereby opening the front of the roof panel opening 2a.

When the flexible member 3 opens to the full, the lock detecting means 79 detects the locking state of the drive motor 13.

When turning the front switch 71 in the closed position in this state, the front portion of the flexible member 3 moves forward due to the activation of the drive motor 13. Accordingly, when the flexible member 3 reaches the front end position and the front ON/OFF switch 71 is again turned into the closed position, tilt-up state is released due to the activation of the drive motor 13. Then the front limit switch 76 becomes OFF state. Finally, the lock detecting means 79 detects the locking state, indicating the end of the opening and closing motion of the front portion of the flexible member 3.

As shown in Fig.11, the opening and the closing of the rear portion of the flexible member 3 is controlled by the forward and the reverse rotation of the second drive motor 19 with the operation of the rear switch 76 on the rear seat.

In detail, when forwardly-activating the second drive motor 19 by turning the rear switch 76 on the rear seat in the open position, the rear plate member 31 in the rear of the flexible member 3 moves forward along with the forward movement of the sliders 17, 17. Therefore, the rear portion of the flexible member 3 is tilted up and folded to open the rear of the roof panel opening 2a in the same manner as the front portion of the flexible member 3. Thus, the passengers in the rear seat can enjoy the upper view and can feel comfortable. When reversely-activating the second drive motor 19 by turning the rear switch 76 on the rear seat in the closed position, the rear plate member 31 of the flexible member 3 moves backward, thus closing the rear of the roof panel opening 2a.

In the case of the rear switch 72 on the driver seat, it is possible to open the rear portion of the flexible member 3 by turning the rear switch 72 in open position. However, even when putting the rear switch 72 in closed position, driving signal cannot be sent to the drive circuit 75 by CPU 73. Accordingly, the reverse rotation of the second drive motor 19 does not occur, with a result that the closing motion of the flexible member 3 is prevented by CPU 73. This means that the rear portion of the flexible member 3 will never be closed by the operation of the rear switch 72 by a driver and a passenger on the front seat without drawing the attention of passengers on the rear seat in the case when they are standing on the rear seat.

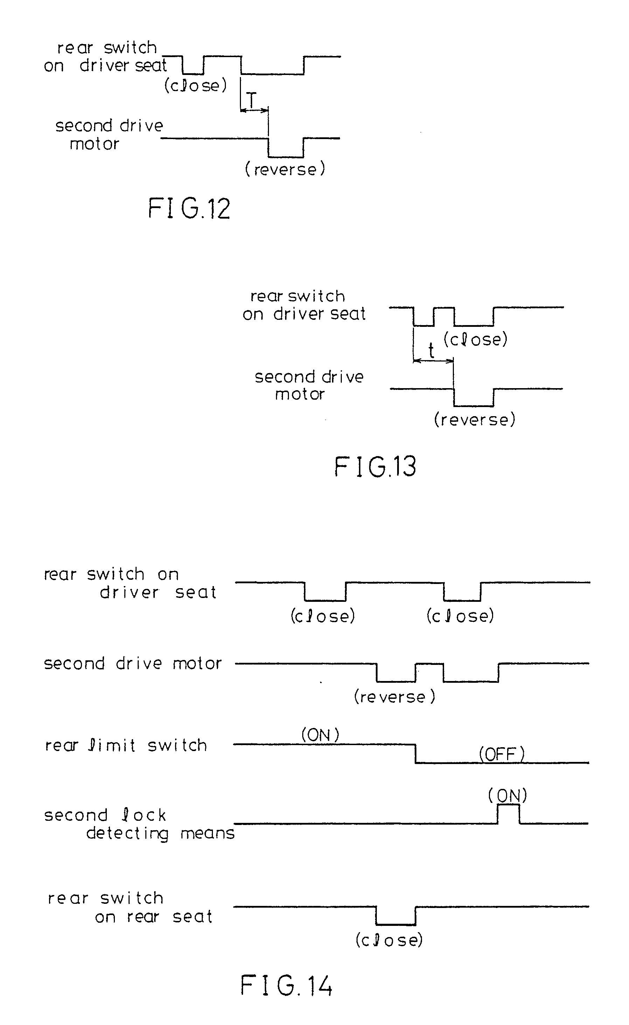

In the above-mentioned preferred embodiment, the rear portion of the flexible member 3 will never be closed by the operation of the rear switch 72 on the driver seat. However, there will be no inconvenience if a driver and a passenger on the front seat pay attention to passengers on the rear seat before closing the rear portion of the flexible member 3. Therefore, the operation of the rear switch 72 on the driver seat can be controlled in the following way. As shown in Fig.12, the second drive motor 19 reversely-rotates only after the continuous operation of the rear switch 72 on the driver seat into the closed position, exceeding a fixed period of time T. And the second drive motor 19 is never activated by just pressing the rear switch 72 into the closed position.

In addition, the operation of the rear switch 72 on the driver seat can be limited in other ways. For example, as shown in Fig. 13, the operation of the rear switch 72 on the driver seat can be limited in such a manner that the second drive motor 19 is activated only when the rear switch 72 is turned in the closed position for the second time before a fixed period of time t passes since the rear switch 72 is turned in the the closed position for the first time. In other words, the rear switch 72 on the driver seat can be a two-step switch so that the second drive motor 19 is activated for the first time by the second step operation following the first step operation where the closing motion of the flexible member 3 has not yet started.

Fig. 14 illustrates further alternative control wherein the rear portion of the flexible member 3 is prohibited from moving to the rearward direction of the vehicle body, thereby preventing the closing motion thereof while the rear portion of the flexible member 3 can move downwardly, thereby permitting the tilt-down motion thereof. More specifically, the second motor 19 cannot be activated when the flexible member 3 is not in the rear end position with the rear limit switch 78 in the ON state, even if the rear switch 72 on the driver seat is turned in the closed position. On the other hand, the second drive motor 19 reversely-rotates to release the tilt-up motion when the flexible member 3 is in the rear end position, closing the roof panel opening 2a, if the rear switch 72 is turned in the closed position.

When the second drive motor 19 stops its activation due to the release of the tilt-up motion, the second lock detecting means 80 outputs ON signal to CPU 73.

The aforementioned embodiment discussed the application of the invention to what is called a "canvas top" of a motor vehicle wherein a slidable roof is a flexible member. Additionally, the present invention can be applied to a slide roof (a sun roof) of a motor vehicle wherein a slidable roof is a plate member.

As many apparently widely different embodiments of this invention may be made without departing from the spirit and scope thereof, it is to be understood that the present embodiment is therefore illustrative and not restrictive. The scope of the invention is defined by the appended claims rather than by the description preceding them, and all changes that fall within meets and bounds of the claims, or equivalence of such meets and bounds are therefore intended to embraced by the claims.

## Claims

1. A slidable roof control device for a motor vehicle having a roof panel constituting an upper portion of a vehicle body, a roof panel opening provided on said roof panel of the vehicle body and enclosed with a front header, a right and a left roof rails and a rear header, a flexible member mounted on said roof panel to be foldable in the longitudinal direction of said vehicle body, said flexible member selectively taking a folded state for opening said roof panel opening and an extended state for closing said roof panel opening, said device comprising:
drive means operatively interconnected with a front and a rear portions of said flexible member for moving said front and said rear portions thereof to the rearward or the forward direction of said vehicle body so as to open the front and the rear of said roof panel opening while moving said front and said rear portions of said flexible member to the forward or the rearward direction so as to close said front and said rear of said roof panel opening;
first ON/OFF command means provided on a driver seat for commanding said drive means to open or close said flexible member;
second ON/OFF command means provided on a rear seat for commanding said drive means to open or close said flexible member; and
control means, responsive to the output from said first and the second ON/OFF command means, for controlling the activation of said drive means as well as restricting the closing motion of said slidable roof in the rear seat at least by said first ON/OFF command means.

2. A slidable roof control device for a motor vehicle as defined in claim 1 wherein said drive means comprises a first drive motor operatively interconnected with said front portion of said flexible member for moving said front portion thereof, and a second drive motor operatively interconnected with said rear portion of said flexible member for moving said rear portion thereof.

3. A slidable roof control device for a motor vehicle as defined in claim 1 wherein said control means prohibits the closing motion of said slidable roof in the rear seat by said first ON/OFF command means.

4. A slidable roof control device for a motor vehicle as defined in claim 1 wherein said first ON/OFF command means is a two-step control switch which closes said flexible member only when a second step control for starting the closing motion of said flexible member is conducted, following a first step control where the closing motion of said flexible member has not yet started.

5. A slidable roof control device for a motor vehicle as defined in claim 1 wherein said second ON/OFF command means commands the opening and closing of only said rear portion of said flexible member.

6. A slidable roof control device for a motor vehicle as defined in claim 1 wherein said control means controls said drive means so as to close said slidable roof in the rear seat when the command for closing said slidable roof in the rear seat by said ON/OFF command means continues, exceeding a certain period of time.

7. A slidable roof control device for a motor vehicle having a roof panel constituting an upper portion of a vehicle body, a roof panel opening provided on said roof panel of said vehicle body and enclosed with a front header, a right and a left roof rails and a rear header, a flexible member mounted on said roof panel to be foldable in the longitudinal direction of said vehicle body, said flexible member selectively taking a folded state for opening said roof panel opening and a extended state for closing said roof panel opening, the device comprising:

drive means operatively interconnected with a rear portion of said flexible member for moving said rear portion thereof to the forward direction of said vehicle body so as to open a rear of said roof panel opening while moving said rear portion of said flexible member to the rearward direction so as to close said rear of said roof panel opening;

first ON/OFF command means provided on a driver seat for commanding said drive means to open or close said rear portion of said flexible member;

second ON/OFF command means provided on a rear seat for commanding said drive means to open or close said rear portion of the flexible member; and

control means, responsive to the output from said first and said second ON/OFF command means, for controlling the activation of said drive means as well as restricting the closing motion of said slidable roof in said rear seat at least by said first ON/OFF command means.

FIG. 1

FIG. 2 (a)

FIG. 2 (b)

EP 0 382 186 A2

← C

31  33  34c  34  32  32a  4b  52a

35  34b  36  44a  53

37  39 38  34a  44  52b  52

← C

FIG.3  (a)

32

32a  33

34a  40

35  5a  5b

34  5

38  5c  5d  41a  12  18  41  41b  18

FIG.3  (b)

EP 0 382 186 A2

FIG.4

FIG.5

FIG. 6

FIG.7

EP 0 382 186 A2

4

61

68

IX

64

5

66

66

FIG. 8

3

61

66

64

66

68

4

67

65

67

62

63

FIG. 9

FIG.10

FIG. 11

rear switch
on driver seat

(close)

T

second drive
motor

(reverse)

FIG.12

rear switch
on driver seat

(close)

t

second drive
motor

(reverse)

FIG.13

rear switch on
driver seat

(close)   (close)

second drive motor

(reverse)

rear limit switch

(ON)

(OFF)

second lock
detecting means

(ON)

rear switch
on rear seat

(close)

FIG.14

FIG.15

FIG.16

EP 0 382 186 A2